# EUROPÄISCHE PATENTSCHRIFT

(11) **EP 2 477 917 B1**
(45) Veröffentlichungstag und Bekanntmachung des Hinweises auf die Patenterteilung: **18.09.2013**
(21) Anmeldenummer: 10770945.3
(22) Anmeldetag: 20.09.2010
(51) Int. Cl.: B65G 23/08, B65G 43/10

(54) **ROLLENFÖRDERER UND VERFAHREN ZUM BETREIBEN DESSELBEN**
ROLLER CONVEYOR AND METHOD FOR OPERATING IT
CONVOYEUR À ROULEAUX ET PROCÉDÉ POUR LE FAIRE FONCTIONNER

(30) Priorität: 18.09.2009 AT 14802009
(43) Veröffentlichungstag der Anmeldung: 25.07.2012
(73) Patentinhaber: TGW Mechanics GmbH, 4600 Wels (AT)
(72) Erfinder: WOLKERSTORFER, Christoph, A -4600 WeIs (AT); REISCHL, Josef, A-4623 Gunskirchen (AT)
(74) Vertreter: Burger, Hannes
(86) Internationale Anmeldenummer: PCT/AT2010/000343
(87) Internationale Veröffentlichungsnummer: WO 2011/032196

(56) Entgegenhaltungen:
- EP-A2- 1 998 427
- WO-A1-2007/036421
- DE-A1-102004 032 005
- US-A- 3 713 521

## Beschreibung

Die Erfindung betrifft einen Rollenförderer und ein Verfahren zum Betreiben desselben, wie im Oberbegriff der Ansprüche 1 und 9 beschrieben.

Es sind bereits Förderrollen bekannt, welche einen auf einer Rollenachse drehbar gelagerten Rollenkörper und einen innerhalb von diesem angeordneten, elektrischen Antriebsmotor umfassen. Derartige Förderrollen werden in der Praxis oftmals dort eingesetzt, wo der Antriebsmotor vor äußeren Einflüssen, wie Staub, Flüssigkeiten oder sonstige Verunreinigungen geschützt werden muss. Der Antriebsmotor verursacht im Betrieb eine Wärmeentwicklung. Die Temperatur darf zumeist abhängig vom Einsatz der Förderrollen eine Maximaltemperatur nicht überschreiten.

Um eine Überschreitung einer Maximaltemperatur zu vermeiden, ist es möglich, die elektrische Antriebsleistung einer motorisierten Förderrolle auf mehrere motorisierte Förderrollen zu verteilen. Dadurch, dass mehrere motorisierte Förderrollen benötigt werden, steigt der Verkabelungs- und Anschlussaufwand für die Förderrollen.

Gemäß der US 2005/0087428 A1, WO 2007/036421 A1 und JP 2004-229338 A ist die motorisierte Förderrolle über Lagervorrichtungen mit ihren Enden in Rahmenprofilen gehalten, wobei die Lagervorrichtungen jeweils eine an die Rahmenprofile anlegbare Kontaktfläche ausbilden und aus einem metallischen Werkstoff gefertigt sind. Dadurch kann die vom Antriebsmotor im Betrieb entwickelte Verlustwärme zum Teil von den Lagervorrichtungen auf die Rahmenprofile übertragen werden.

Die WO 2007/036421 A1 offenbart ferner, dass die Förderrolle einen Kühlkörper und eine Rollenachse mit einer axialen Bohrung (Heatpipe) aufweist, mittels welcher ein Teil der Verlustwärme in axialer Richtung aus dem Antriebsmotor über den Kühlkörper an den Rollenkörper bzw. an die Rahmenprofile abgeführt wird.

Aus der WO 2004/107531 A1 ist es bekannt, dass innerhalb oder außerhalb des Rollenkörpers der motorisierten Förderrolle ein Lüfter vorgesehen ist, mittels welchem ein Teil der Verlustwärme des Antriebsmotors abgeführt wird.

Diese bekannten Förderrollen sind durch die baulich sehr aufwändigen Maßnahmen zwar innerhalb vorgegebener Temperaturgrenzen betreibbar, jedoch ist eine kostengünstige Herstellung der Förderrolle nicht mehr möglich.

Aus der DE 10 2004 032 005 A1 ist eine Förderrolle bekannt, die einen Rollenkörper und einen innerhalb von diesem angeordneten, elektrischen Antriebsmotor umfasst, der auch als Generator eingesetzt werden kann, wenn auf die Förderrolle eine externe Kraft von einem abzubremsenden Fördergut einwirkt. Die vom Antriebsmotor generatorisch erzeugte Energie kann in einem innerhalb des Rollenkörpers angeordneten Energiespeicher zwischengespeichert werden. Der Energiespeicher kann die ebenfalls innerhalb des Rollenkörpers angeordnete Antriebselektronik mit elektrischer Energie versorgen. Um die dabei entstehende Wärme aus der Förderrolle abzuführen, ist eine zusätzliche Kühlung erforderlich.

Des Weiteren sind aus dem Stand der Technik Förderrollen bekannt, welche einen auf einer Rollenachse drehbar gelagerten Rollenkörper umfassen, innerhalb dem ein elektrischer Antriebsmotor und eine diesen ansteuernde Antriebselektronik angeordnet sind. Die Antriebselektronik ist mit einem so genannten "Bremswiderstand" ausgestattet, mittels welchem die beim Bremsen der Förderrolle erzeugte Bremsenergie in Wärme umgewandelt wird. Häufige Schaltzyklen dieser bekannten Förderrolle, daher Umschalten zwischen Antreiben und Bremsen der Förderrolle, führen zu einer hohen Erwärmung des Rollenkörpers.

Die Aufgabe der Erfindung liegt darin, eine Förderanlage zum Fördern von Fördergut mit Förderrollen zu schaffen, bei welcher in ihrer Betriebsphase eine übermäßige Erwärmung der motorisierten Förderrolle vermieden wird.

Die Aufgabe der Erfindung wird durch die Merkmale und Maßnahmen der Ansprüche 1 und 9 gelöst. Von Vorteil ist, dass im Gegensatz zu solchen aus dem Stand der Technik bekannten Betriebsveifahren und Rollenförderer zusätzliche Maßnahmen zur Kühlung der mit einer elektrischen Maschine ausgestatteten Förderrolle entfallen kann, da die beim Abbremsen durch die bewegte Masse eines Ladegutes erzeugte Bremsenergie von der elektrische Maschine in elektrische Energie umgewandelt und letztere von der Förderrolle in das ohnehin vorhandene Energieversorgungssystem abgegeben wird. Dabei wird die vom Energieversorgungssystem bereitgestellte elektrische Energie in einer Beschleunigungsphase einer anderen motorisierten Förderrolle verwendet. Dadurch kann nicht nur eine Förderrolle kostengünstig hergestellt werden, sondern ist auch ein zuverlässiger Betrieb des Rollenförderers selbst bei hoher Anzahl an Schaltzyklen (Anfahren/Bremsen einer motorisierten Förderrolle) möglich.

Die von der elektrischen Maschine erzeugte Energie wird im Energieversorgungssystem bereitgestellt und kann ausgehend von diesem für unterschiedliche Zwecke genutzt werden. Nach den Ansprüchen 4, 5 und 13 wird die elektrische Energie in einem Energiespeicher gepuffert, um später beispielsweise in einer Beschleunigungsphase einer anderen motorisierten Förderrolle verwendet zu werden. Möglich ist auch die Ausführung nach den Ansprüchen 6 und 14, wonach ein Teil der vom elektrischen Motor erzeugten, elektrischen Energie zum Aufladen des Energiespeichers verwendet wird, wenn in einer Beschleunigungsphase einer anderen motorisierten Förderrolle keine Energie benötigt wird oder ein Grenzwert der Spannung im Energieversorgungssystem erreicht wird.

Eine vorteilhafte Maßnahme ist auch in den Ansprüchen 7 und 12 beschrieben, da eine Überschreitung eines maximalen Grenzwertes der Spannung im Energieversorgungssystem vermieden bzw. das Spannungsniveau im Energieversorgungssystem in einer Bandbreite von beispielsweise 48 VDC ± 20% gehalten wird, selbst wenn eine übermäßig hohe Anzahl an oder sämtliche motorisierten Förderrollen in eine Verzögerungsphase versetzt bzw. abgebremst werden und von einer hohen Anzahl an oder sämtlichen, elektrischen Motoren Energie erzeugt wird. Somit wird auch im "Nothalt" des Rollenförderers eine Spannungsüberhöhung im Energieversorgungssystem vermieden.

Vorteilhaft sind auch die Maßnahmen nach den Ansprüchen 8 und 15, da mit dem Überwachungsmodul beispielsweise die Abgabe von Energie über eine elektronische Schaltung aus einem Energiespeicher in das Energieversorgungssystem erfasst und damit eine Spannungsüberhöhung im Energieversorgungssystem zuverlässig vermieden wird. Auch können über das Überwachungsmodul Schwankungen der Versorgungsspannung im Energieversorgungssystem erfasst und Maßnahmen eingeleitet werden, die zu einer Stabilisierung der Versorgungsspannung beitragen.

Gemäß der Ausführung nach Anspruch 16 wird eine weitere vorteilhafte Maßnahme zur Verbesserung der theimischen Belastung der Förderrolle beschrieben. Dabei wird ein Teil der von der elektrischen Maschine in den Wicklungen des Stators erzeugten Wärme von der Lagervorrichtung über eine am Rahmenprofil anliegende Außenfläche auf das Rahmenprofil übertragen. Da die Rahmenprofile aus metallischem Werkstoff gefertigt sind und die Außenfläche der Lagervorrichtung mit dem Rahmenprofil wärmetechnisch verbunden ist, wirkt das Rahmenprofil für die Förderrolle als ein großer Kühlkörper.

Zum besseren Verständnis der Erfindung wird diese anhand der nachfolgenden Figuren näher erläutert.

Es zeigen jeweils in stark schematisch vereinfachter Darstellung:
- Fig. 1: eine Draufsicht auf einen erfindungsgemäßen Rollenförderer;
- Fig. 2: eine mögliche Ausführung einer motorisierten Förderrolle, im Längsschnitt;
- Fig. 2a: eine Ausschnittsvergrößerung der Förderrolle aus Fig. 2 mit einer ersten Lagervorrichtung, einer Kontaktierungsvoirichtung und einem Bussystem;
- Fig. 2b: eine Ausschnittsvergrößerung der Förderrolle aus Fig. 2 mit einer zweiten Lagervorrichtung;
- Fig. 3: die erste Lagervorrichtung im Längsschnitt;
- Fig. 4: die erste Lagervorrichtung gemäß Fig. 3 in Stirnansicht;
- Fig. 5: die erste Lagervorrichtung gemäß Fig. 3 in Draufsicht;
- Fig. 6: die zweite Lagervorrichtung im Längsschnitt;
- Fig. 7: die zweite Lagervorrichtung gemäß Fig. 6 in Stirnansicht;
- Fig. 8: die zweite Lagervorrichtung gemäß Fig. 6 in Draufsicht;
- Fig. 9: ein Kommunikationssystem und Energieversorgungssystem für den erfindungsgemässen Rollenförderer.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

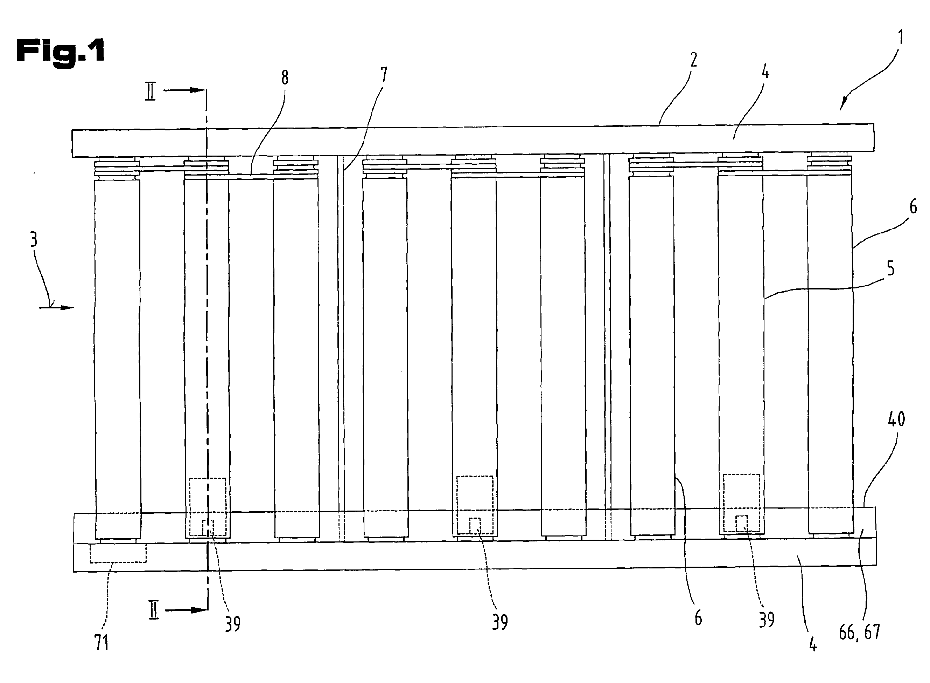

In Fig. 1 ist ein Ausschnitt aus einer Förderanlage mit einem Rollenförderer 1 zum Fördern von Ladegut, beispielsweise Behälter, in Draufsicht gezeigt. Die Förderanlage 1 umfasst einen Rahmen 2 mit in Förderrichtung 3 parallel verlaufenden Rahmenprofilen 4 und Förderrollen 5, 6, wovon die Förderrollen 5 mit einer noch näher zu beschreibenden elektrischen Maschine (Antriebsmotor) ausgestattet und die Förderrolle 6 als frei drehbare Tragrollen ausgebildet sind. Die Rahmenprofile 4 sind über mehrere Querträger 7 verbunden und somit auf Abstand gehalten. Die Rahmenprofile 4 und Querträger 7 bilden den Rahmen 2 der Förderanlage 1. Nach gezeigter Ausführung ist eine motorisierte Förderrollen 5 mittels Zugmittel 8, insbesondere Riemen, mit einer in Förderrichtung 3 vorgeordneten und nachgeordneten freilaufenden Förderrolle 6 verbunden. Nach einer anderen, nicht gezeigten Ausführung ist eine motorisierte Förderrolle 5 mittels einem Zugmittel 8 mit nur einer in Förderrichtung 3 vorgeordneten oder nachgeordneten freilaufenden Förderrolle 6 verbunden. Andererseits kann der Rollenförderer 1 ausschließlich motorisierte Förderrollen 5 umfassen.

Die Rahmenprofile 4 sind in ihrem oberen Bereich mit paarweise gegenüberliegenden und in dessen Längserstreckung mit Abstand angeordneten Lageraufnahmen 11 versehen. Jede Lageraufnahme 11 weist einen Führungsabschnitt und eine an diesen angrenzende Einschuböffnung 13 auf.

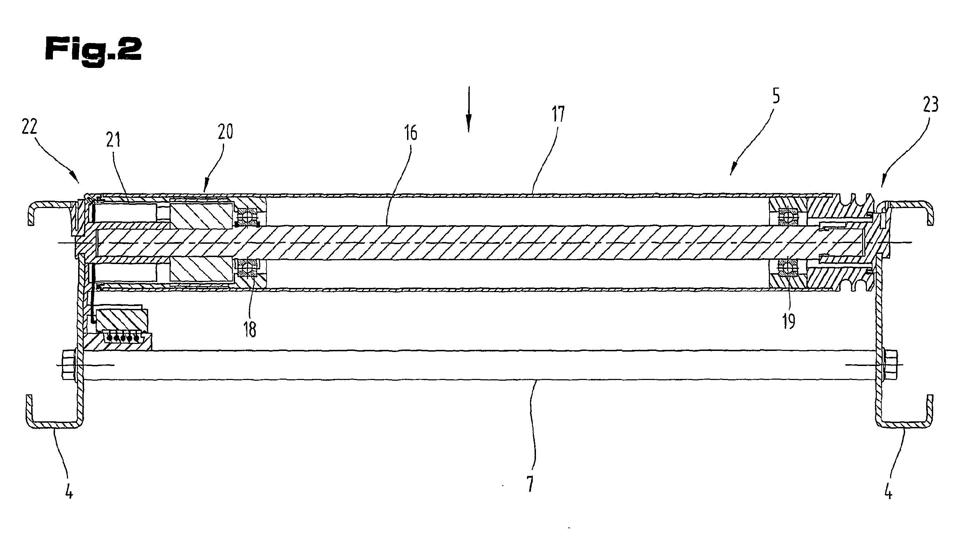

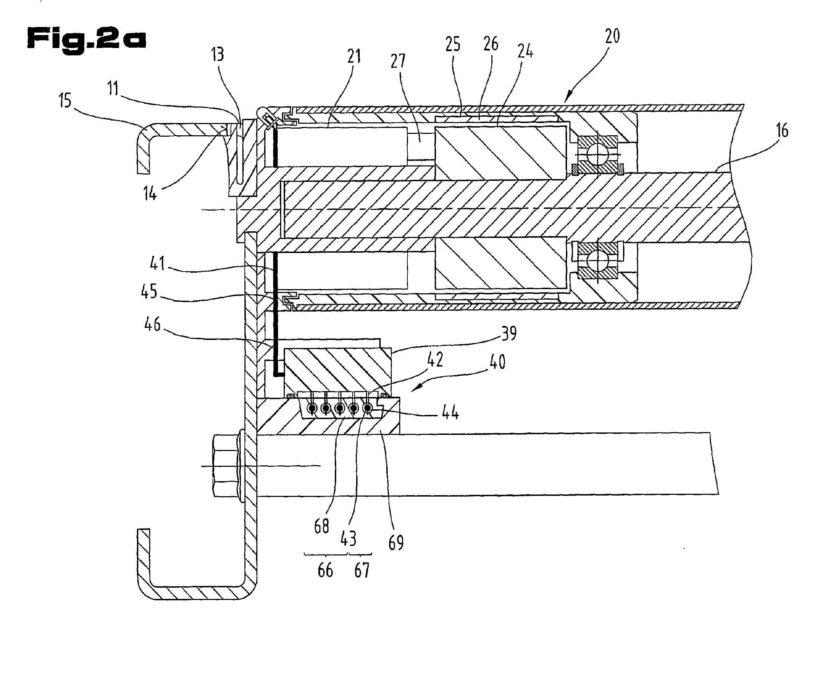

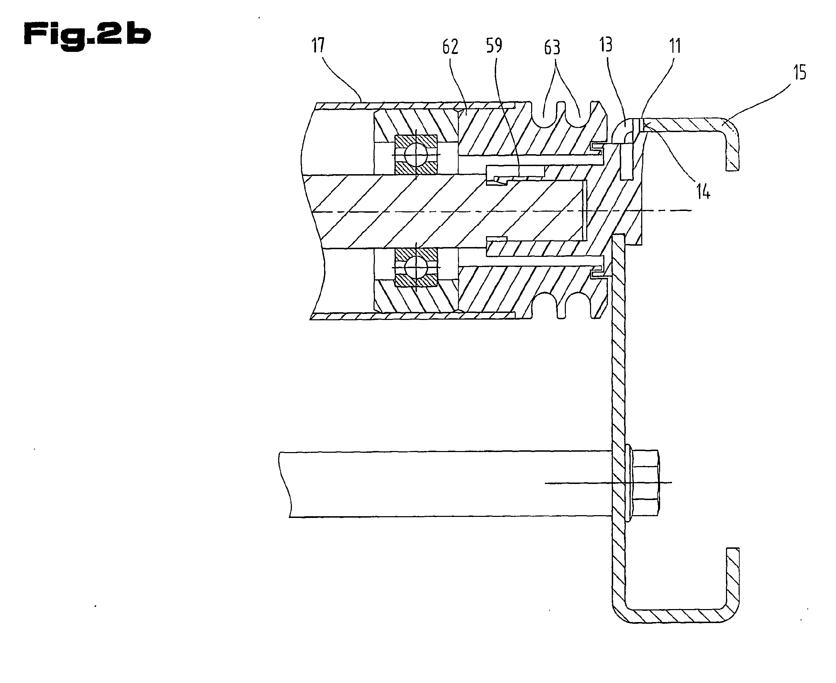

In den Fig. 2, 2a und 2b ist eine mögliche Ausführung einer motorisierten Förderrolle 5 in montiertem Zustand gezeigt. Die Förderrolle 5 umfasst eine Rollenachse 16, einen hohlzylindrischen Rollenkörper 17, ein erstes Lager 18, ein zweites Lager 19, eine elektrische Maschine 20 (Antriebsmotor), eine Antriebselektronik 21 und an den gegenüberliegenden Enden des Rollenkörpers 17 Lagervorrichtungen 22, 23. Der Rollenkörper 17 weist zumindest einen zylindrischen Rollenmantel auf. Die motorisierte Förderrolle 5 ist über die Lagervorrichtungen 22, 23 auswechselbar an den Rahmenprofilen 4 gelagert. Die elektrische Maschine 20 und die Antriebselektronik 21 sind innerhalb des Rollenkörpers 17 angeordnet, wie noch genauer beschrieben wird. Der Rollenkörper 17 ist auf der feststehenden Rollenachse 16 über die Lager 18, 19 drehbar gelagert. Die Lager 18, 19 sind beispielsweise durch Kugellager gebildet.

Die Antriebselektronik 21 weist eine Elektronikstromversorgung, Leistungselektronik zur Speisung der elektrischen Maschine 20, eine Regelungsvorrichtung zur Regelung der elektrischen Maschine 20, eine Kommunikationsvorrichtung und/oder eine Diagnosevorrichtung, beispielsweise eine LED, auf.

Die elektrische Maschine 20 ist durch einen elektronisch kommutierten, bürstenlosen dreiphasigen Gleichstrommotor gebildet, welcher einen auf der Rollenachse 16 (formschlüssig) befestigten Stator 24 und einen um diesen angeordneten Rotor 25 umfasst. Zwischen Stator 24 und Rotor 25 ist ein Luftspalt ausgebildet. Der Stator 24 weist nicht gezeigte Statorblechpakete mit beispielsweise sechs Wicklungen auf. Die Wicklungen werden von der Antriebselektronik 21 mit einer Gleichspannung von kleiner 50 VDC (Schutzkleinspannung), insbesondere 24 VDC oder 48 VDC, gespeist.

Der Rotor 25 (Außenläufer) weist beispielsweise 14 Permanentmagnete 26 auf, die mit dem Rohrkörper 18 verbunden sind. Die Permanentmagnete 26 sind nach gezeigter Ausführung in einer Vertiefungsnut an einem rohrförmigen Tragkörper befestigt, welcher mit dem Rollenkörper 17 fest verbunden ist. Der Rollenkörper 17 kann als Rückschlussrohr der elektrischen Maschine 20 verwendet werden. Der Rotor 25 kann infolge der von den Wicklungen erzeugten Magnetkräfte frei um den Stator 24 drehen. Der Antriebsmotor bzw. die elektrische Maschine 20 ist demnach als Außenläufermotor ausgebildet.

Die Antriebselektronik 21 und die elektrische Maschine sind über einen Anschlussstecker 27 elektrisch miteinander verbunden.

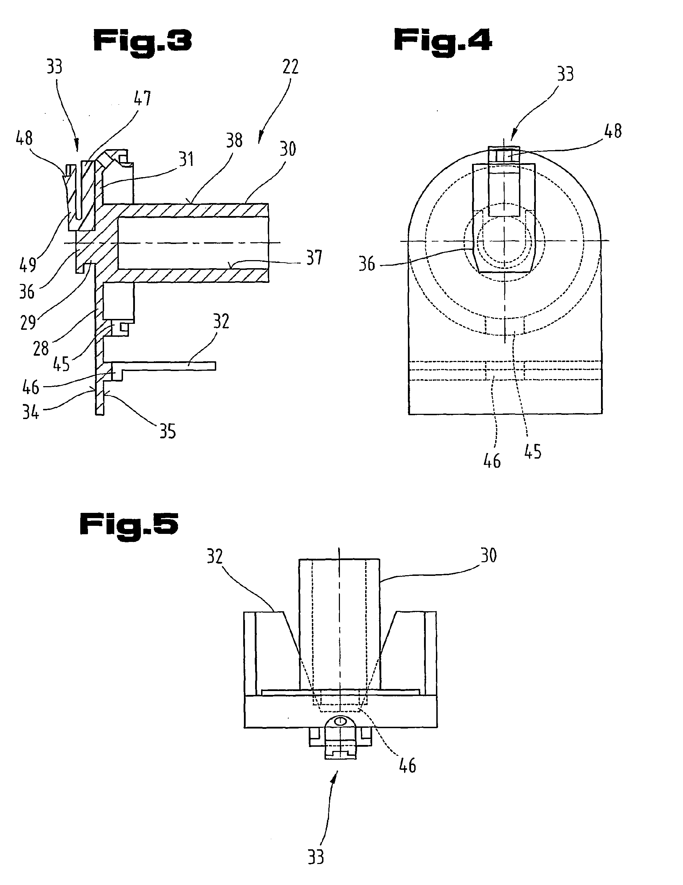

In den gemeinsam beschriebenen Fig. 3 bis 5 ist die erste Lagervorrichtung 22 in unterschiedlichen Ansichten gezeigt. Die Lagervorrichtung 22 umfasst einen aus der Außenkontur des Rollenkörpers 17 herausragenden, plattenförmigen Lagerkörper 28, einen Führungsteil 29, eine Lagerbuchse 30, einen zylindrischen Lagerbund 31, eine Halterung 32 und eine Verriegelungsvorrichtung 33. Der Lagerkörper 28 bildet eine an die Innenseite des ersten Rahmenprofils 4 anlegbare Außenfläche 34 und eine dieser gegenüberliegende Innenfläche 35 aus. Die Außenfläche 34 dient als Lagerfläche. Zur axialen Fixierung der ersten Lagervorrichtung 22 relativ zum ersten Rahmenprofil 4, weist der Führungsteil 29 zusätzlich ein den Führungsabschnitt im Rahmenprofil 4 abschnittsweise hintergreifendes Formelement 36 auf.

Wie in den Fig. 2 und 2a dargestellt, ist die erste Lagervorrichtung 22 über eine Lagerbohrung 37 auf das erste Ende der Rollenachse 16 aufgeschoben und über zumindest ein (nicht dargestelltes) Sicherungselement in axialer Richtung auf der Rollenachse 16 fixiert gehalten und/oder gegen Verdrehung gesichert.

Die erste Lagervorrichtung 22 kann ferner eine Aufnahme 38 aufweisen, welche der Befestigung der Antriebselektronik 21 dient, und vorzugsweise von der Lagerbuchse 30 ausgebildet wird.

Die Halterung 32 ist durch eine Konsole gebildet und ragt an der Innenfläche 35 vor, an der eine elektrische Kontaktierungsvorrichtung 39 zum Anschluss an ein, in Fig. 2a näher dargestelltes Bussystem 40 befestigt ist. Die Kontaktierungsvorrichtung 39 ist über ein elektrisches Leitungssystem 41 mit der Antriebselektronik 21 verbunden und weist Kontaktelemente 42 zur elektrischen Kontaktierung von Leitungen 43 des Bussystems 40 auf. Die Kontaktelemente 42 sind durch Piercing-Kontakte oder Schneidkontakte etc. gebildet, daher weisen die Kontaktelemente 42 jeweils ein Mittel zum Durchtrennen eines Isolierkörpers 44 und Kontaktieren der elektrischen Leitung 43 auf. Das Leitungssystem 41 kann durch auf einer Trägerplatine angeordnete Leitungen oder ein Verbindungskabel gebildet sein.

Die erste Lagervorrichtung 22 weist ferner an ihrem Lagerbund 31 und der Halterung 32 jeweils eine nutartige Aussparung 45, 46 versehen, durch welche das Leitungssystem 41 in radialer Richtung zur Rollenachse 16 hindurchgeführt wird.

Die Verriegelungsvorrichtung 33 weist einen Grundkörper 47 und eine relativ zum Grundkörper 47 verstellbare Rastnase 48 auf, die nach gezeigter Ausführung über eine elastische Federzunge 49 mit dem Grundkörper 47 verbunden ist.

Die erste Lagervorrichtung 22 ist mit Ausnahme der Verriegelungsvorrichtung 33 aus einem wärmeleitenden Material, insbesondere Metall, beispielsweise eine Aluminiumlegierung, einstückig hergestellt. Die Verriegelungsvorrichtung 33 ist hingegen aus einem elastisch verformbaren Material, beispielsweise Kunststoff, einstückig geformt.

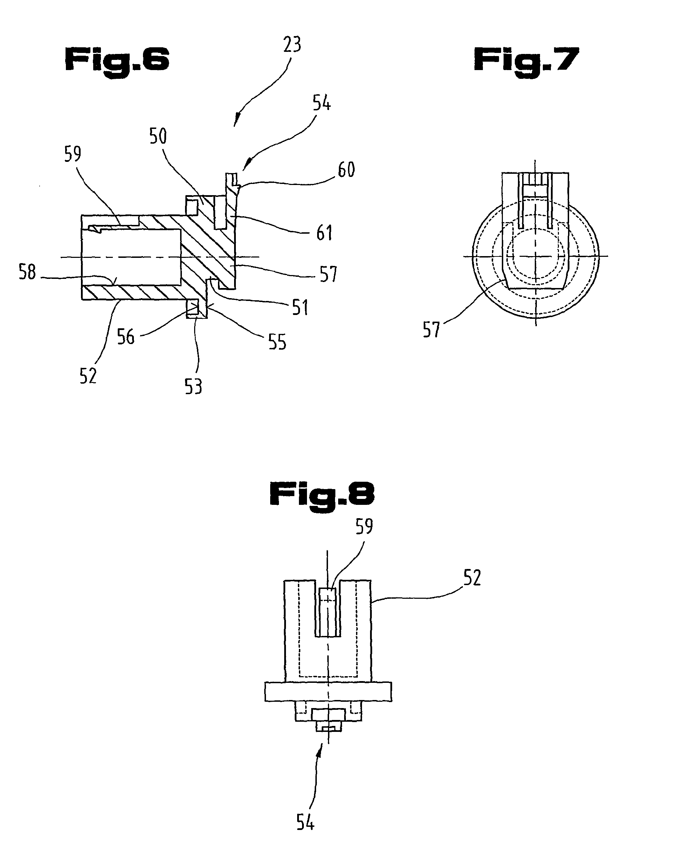

In den gemeinsam beschriebenen Fig. 6 bis 8 ist die zweite Lagervorrichtung 23 in unterschiedlichen Ansichten gezeigt. Die Lagervorrichtung 23 umfasst einen plattenförmigen Lagerkörper 50, einen Führungsteil 51, eine Lagerbuchse 52, einen zylindrischen Lagerbund 53 und eine Verriegelungsvorrichtung 54. Der Lagerkörper 50 bildet eine an die Innenseite des zweiten Rahmenprofils 4 anlegbare Außenfläche 55 und eine dieser gegenüberliegende Innenfläche 56 aus. Die Außenfläche 55 dient als Lagerfläche. Zur axialen Fixierung der zweiten Lagervorrichtung 23 relativ zum zweiten Rahmenprofil 4, weist der Führungsteil 51 zusätzlich ein den Führungsabschnitt im Rahmenprofil 4 abschnittsweise hintergreifendes Formelement 57 auf.

Wie in den Fig. 2b, 6 bis 8 dargestellt, ist die zweite Lagervorrichtung 23 über eine Lagerbohrung 58 auf das zweite Ende der Rollenachse 16 aufgeschoben und über zumindest ein Sicherungselement 59 in axialer Richtung auf der Rollenachse 16 fixiert gehalten und/oder gegen Verdrehung gesichert.

Die Verriegelungsvorrichtung 54 weist eine relativ zum Lagerkörper 50 verstellbare Rastnase 60 auf, die nach gezeigter Ausführung über eine elastische Federzunge 61 mit dem Lagerkörper 50 verbunden ist.

Wie in Fig. 2b dargestellt, kann der Rollenkörper 17 der motorisierten Förderrolle 5 auch mit einer Übertriebsscheibe 62 versehen sein, die an einer seiner Stirnseiten des zylindrischen Rollenmantels angeordnet ist. Die Übertriebsscheibe 62 weist beispielsweise zwei umlaufende Rillen 63 auf, in denen in Fig. 1 schematisch dargestellte Zugmittel 8 geführt sind, die mit zwei benachbarten, frei drehbaren Förderrollen 6 gekuppelt sind.

Es sei an dieser Stelle darauf hingewiesen, dass die erste Lagervorrichtung 22 und/oder zweite Lagervorrichtung 23 nicht zwingend erforderlich ist/sind. Genauso gut kann das erste Ende und/oder zweite Ende der Rollenachse 16 direkt in die Lageraufnahme(n) 11 verdrehgesichert eingesteckt werden, wie nicht weiters dargestellt.

Das Bussystem 40 ist entlang dem Rollenförderer 1 in einer horizontalen oder geneigten Ebene unterhalb der Förderrollen 5, 6 (Fig. 1) zwischen den Rahmenprofilen 4 angeordnet und weist einen Datenbus 66 und Energieversorgungsbus 67 auf. Die Busse weisen jeweils die elektrischen Leitungen 43 auf, die von einem Isolierkörper 44 umgeben sind. Das Bussystem 40 umfasst nach gezeigter Ausführung neben dem Daten- und Energieversorgungsbus 66, 67 zusätzlich einen aus elastischem Material hergestellten Tragkörper 68, in welchem die Leitungen 43 eingebettet sind. Vorzugsweise ist das Bussystem 40 auf einer zwischen den Rahmenprofilen 4 unterhalb der Förderrollen 5, 6 vorgesehenen, beispielsweise am ersten Rahmenprofil 4 montierten Trägerschiene 69 angeordnet.

Zur Montage einer Förderrolle 5 im Rahmen 2, wird die Förderrolle 5 derart von oben zwischen die Rahmenprofile 4 bewegt, dass die Führungsteile 29, 51 und die Verriegelungsvorrichtungen 33, 54 der Lagervorrichtungen 22, 23 über die Einschuböffnungen 13 nach unten in die beiden einander gegenüberliegenden Lageraufnahmen 11 eintreten. Schließlich führt die Montagebewegung dazu, dass die Rastnasen 48, 60 unter einen Führungsrand 14 (Fig. 2a, 2b) in den oberen Profilschenkeln 15 tritt und die Rastnasen 48, 60 den Führungsrand 14 in den oberen Profilschenkeln 15 formschlüssig hintergreifen.

Während der Montagebewegung der motorisierten Förderrolle 5, wie in Fig. 2 durch den Pfeil angedeutet, in ihre Montagestellung in radialer Richtung zur Rollenachse 16 relativ zu den Rahmenprofilen 4 durchdringen die Kontaktelemente 42 der Kontaktierungsvorrichtung 39 den Tragkörper 68 und den Isolierkörper 44 der Leitungen 43. Befindet sich die Förderrolle 5 in ihrer Montagestellung (Fig. 2), sind die Kontaktelemente 42 mit den Leitungen 43 des Bussystems 40 elektrisch verbunden. Demnach ist am Ende der Montagebewegung einerseits die elektrische Anschlussverbindung zwischen der Antriebselektronik 21 und dem Bussystem 40 hergestellt und andererseits die Förderrolle 5 relativ zu den Rahmenprofilen 4 über zumindest eine Lagervorrichtung 22 oder beide Lagervorrichtungen 22, 23 mechanisch verriegelt oder über die Enden der Rollenachse 16 verdrehgesichert gehalten.

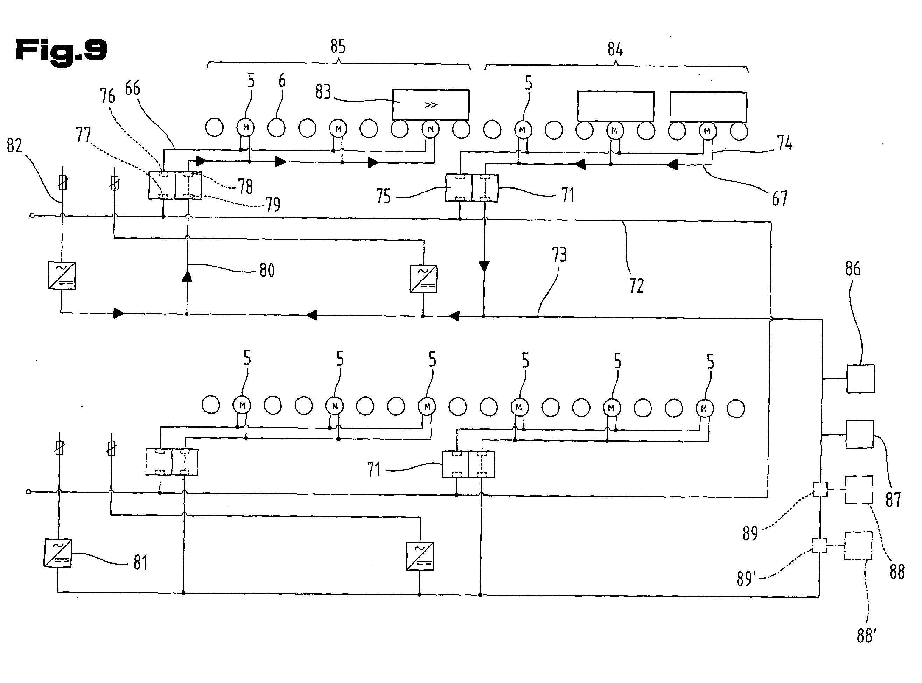

In Fig. 9 ist das Kommunikationssystem und elektrische Energieversorgungssystem für den erfindungsgemässen Rollenförderer 1 dargestellt. Der Rollenförderer 1 weist zumindest eine vorzugsweise am Rahmen 2 befestigte Kommunikation- und Energieversorgungseinheit 71 auf, die Schnittstellen aufweist, an welche vom Kommunikationssystem ein erster Datenbus 66 und zweiter Datenbus 72 und vom Energieversorgungssystem ein erster Energieversorgungsbus 67 und zweiter Energieversorgungsbus 73 anschließbar sind. Der erste Datenbus 66 ist beispielsweise ein CAN - Bus (Controller Area Network). Die motorisierten Förderrollen 5 sind über die Kontaktierungsvorrichtung 39 (Fig. 2a) jeweils mit ihrer Antriebselektronik 21 an den ersten Datenbus 66 anschließbar. Der erste Datenbus 66 ermöglicht die bidirektionale Kommunikation zwischen den Förderrollen 5 und der Kommunikation- und Energieversorgungseinheit 71. Wie oben beschrieben sind die Kontaktierungsvorrichtung 39 und die Antriebselektronik 21 jeder Förderrolle 5 über das elektrische Leitungssystem 41 (Fig. 2a) verbunden, welches eine Energieversorgungsleitung 74 aufweist. Die Energieversorgungsleitungen 74 jeder Förderrolle 5 sind an den ersten Energieversorgungsbus 67 angeschlossen.

Ebenso sind die motorisierten Förderrollen 5 über die Kontaktierungsvorrichtung 39 jeweils mit ihrer Antriebselektronik 21 an den ersten Energieversorgungsbus 67 anschließbar. Der erste Energieversorgungsbus 67 ist beispielsweise ein Gleichspannungsbus, mittels dem die Antriebselektronik 21 und die elektrische Maschine 20 der Förderrollen 5 der Förderanlage mit elektrischer Energie, beispielsweise 48 VDC, versorgt werden.

Die Kommunikation- und Energieversorgungseinheit 71 ist dafür ausgelegt, dass an dieser über den ersten Datenbus 66 und ersten Energieversorgungsbus 67 beispielsweise bis zu 80 motorisierten Förderrollen 5 mit ihren elektrischen Maschinen 20 und/oder Antriebselektroniken 21 angeschlossen sind.

Umfasst der Rollenförderer 1 darüber hinaus eine höhere Anzahl von motorisierten Förderrollen 5, so werden entsprechend der Anzahl von motorisierten Förderrollen 5 mehrere Kommunikation- und Energieversorgungseinheiten 71, wie in Fig. 9 dargestellt, vorgesehen. Demnach kann der Rollenförderer 1 mehrere Gruppen von motorisierten Förderrollen 5 umfassen, welche jeweils von einer Kommunikation- und Energieversorgungseinheit 71 mit Daten und Energie versorgt werden.

Sind mehrere Kommunikation- und Energieversorgungseinheiten 71 erforderlich, sind diese durch den zweiten Datenbus 72 miteinander verbunden, sodass der zweite Datenbus 72 eine geschlossene Ringstruktur bildet. Der zweite Datenbus 72 ist ein Feldbus, beispielsweise Ethernet, und ermöglicht die bidirektionale Kommunikation zwischen den Kommunikation- und Energieversorgungseinheiten 71 und zwischen einer Kommunikation- und Energieversorgungseinheit 71 und einer zentralen Steuerung (nicht dargestellt).

Die Kommunikation- und Energieversorgungseinheit 71 umfasst einen an sich bekannten Buskoppler 75 mit einer ersten Schnittstelle und einer zweiten Schnittstelle, über welchen die unterschiedlichen Datenbusse 66, 72 verbunden sind und einen busunabhängigen Datenaustausch ermöglicht. Der Buskoppler 75 bildet demnach ein Kommunikationsmodul, über welches geräte- und herstellemeutral Protokolle bzw. Telegramme ausgetauscht werden können. Die Schnittstellen des Buskopplers 75 bilden die erste und zweite Schnittstelle 76, 77 der Kommunikation- und Energieversorgungseinheit 71. An die erste Schnittstelle 76 ist der erste Datenbus 66 und an die zweite Schnittstelle 77 ist der zweite Datenbus 72 anschließbar.

Die Kommunikation- und Energieversorgungseinheit 71 umfasst ferner eine dritte Schnittstelle 78 und vierte Schnittstelle 79. An die dritte Schnittstelle 78 ist der erste Energieversorgungsbus 67 und an die vierte Schnittstelle 79 ist eine Stichleitung 80 des zweiten Energieversorgungsbusses 73 anschließbar. Nach gezeigter Ausführung sind die dritte Schnittstelle 78 und vierte Schnittstelle 79 über eine Leitung miteinander verbunden. Ist eine Aufbereitung des Spannungssignals, insbesondere des Gleichspannungssignals erforderlich, wird die Kommunikation- und Energieversorgungseinheit 71 zusätzlich mit einem elektronischen Aufbereitungsmodul (nicht dargestellt), beispielsweise Filter, Modulator, Demodulator und/oder Spannungswandler (Gleichstromsteller, insbesondere Abwärtswandler) etc., ausgestattet, an welches die dritte Schnittstelle 78 und vierte Schnittstelle 79 angeschlossen sind.

Der zweite Energieversorgungsbus 73 ist mit zumindest einem Netzteil 81 verbunden. In einer vorteilhaften Ausführung ist zur Stabilisierung der Energieversorgung im Energieversorgungsbus 73 jede Kommunikation- und Energieversorgungseinheit 71 an ein Netzteil 81 angeschlossen. Die Netzteile 81 umfassen jeweils einen AC/DC-Wandler, mittels welcher die den Netzteilen 81 aus einem Energieversorgungsnetz 82 zugeführte Wechselspannung von beispielsweise 400VAC in eine Gleichspannung von kleiner 50 VDC (Schutzkleinspannung), insbesondere 24 VDC oder 48 VDC, umgewandelt wird.

Anhand der Fig. 9 wird das erfindungsgemäße Verfahren zum Betreiben des Rollenförderers 1 beschrieben. Ein derartiger Rollenförderer 1 kann Ladegüter 83 auf unterschiedliche Weise entlang des Förderweges in Förderrichtung 3 transportieren.

So können die Ladegüter 83 beispielsweise entlang des Förderweges in einem Staubabschnitt gestoppt und danach wieder abgefördert werden. Dazu wird die elektrische Maschine 20 zumindest einer Förderrolle 5 von der zentralen Steuerung durch Übermittlung von Steuersignalen über die Datenleitungen 66,72 an die Antriebselektronik 21 geregelt betrieben. Beim Stoppen eines Ladegutes 83 wird zumindest eine mit einer Nenndrehzahl rotierende Förderrolle 5 über ihre elektrische Maschine 20 vorzugsweise geregelt (durch eine Regelung geführt) bis zum Stillstand abgebremst. Sobald das Ladegut 83 weiter transportiert werden muss, wird die stillstehende Förderrolle 5 über ihre elektrische Maschine 20 geregelt (durch eine Regelung geführt) bis auf die Nenndrehzahl beschleunigt. Diese Regelung ist vorzugsweise auf der Antriebselektronik 21 jeder Förderrolle 5 vorgesehen.

Soll die Fördergeschwindigkeit während des Transportes eines Ladegutes 83 entlang des Förderweges verändert werden, wird zumindest eine Förderrolle 5 über ihre elektrische Maschine 20 vorzugsweise geregelt von einer vorläufigen Nenndrehzahl auf eine abgeänderte Nenndrehzahl abgebremst oder beschleunigt. Das Abbremsen und Beschleunigen wird alleinig durch eine an sich bekannte Regelung der elektrischen Maschine 20 erreicht.

Daher treten im Betrieb des Rollenförderers 1 an einer Förderrolle 5, vorzugsweise durch eine Regelung geführte Beschleunigungs- und Verzögerungsphasen auf. In der Verzögerungsphase einer Förderrolle 5, entsprechend dem geregelten Abbremsen der elektrischen Maschine 20, wird die Fördergeschwindigkeit eines auf der Förderrolle 5 auflasteten Ladegutes 83 verringert und dabei die kinetische Energie (Bremsenergie) der bewegten Masse des Ladegutes 83 von der elektrischen Maschine 20 größtenteils in elektrische Energie umgewandelt. Daher wirkt in der Verzögerungsphase einer Förderrolle 5 die elektrische Maschine 20 als Generator, welcher Gleichspannung erzeugt.

Um eine Erhöhung der Spannung oder sogar eine Überspannung im Energieversorgungssystem und damit Zerstörung der elektrischen Komponenten der Antriebselektronik 21 zu verhindern, ist es aus dem Stand der Technik insbesondere bekannt, innerhalb des Rollenkörpers einen Bremswiderstand zu installieren, der die von der elektrischen Maschine 20 generatorisch erzeugte (überschüssige) Energie in Wärme umwandelt. Dadurch wird der Rollenkörper der Förderrolle stark erwärmt, sodass durch thermische Abstrahlung eine erhebliche Gefahr von Beschädigungen am Ladegut besteht oder das Ladegut bestimmte Materialeigenschaften aufweisen muss.

Nach einschlägigen Vorschriften darf eine Temperatur von ca. 75°C nicht überschritten werden.

Gemäß der Erfindung ist es nun vorgesehen, dass die in der Verzögerungsphase einer Förderrolle 5 von der elektrischen Maschine 20 generatorisch erzeugte (überschüssige) Energie über die Energieversorgungsleitung 74 an das Energieversorgungssystem abgegeben und in einer Beschleunigungsphase zumindest einer anderen, motorisierten Förderrolle 5 verwendet wird. Dadurch wird eine unzulässige Erhöhung der Spannung im Energieversorgungssystem und damit Zerstörung der elektrischen Komponenten der Antriebselektronik 21 vermieden. Zudem kann gegenüber bekannten Rollenförderern eine Energieersparnis erreicht werden und ist somit ein besonders wirtschaftlicher Betrieb des Rollenförderers 1 möglich.

Wie in Fig. 9 anhand von nur zwei Abschnitten 84, 85 des Rollenförderers 1 erläutert, werden in einem ersten Abschnitt 84 mehrere Ladegüter 83 entweder gleichzeitig oder aufeinander folgend abgebremst. In der Verzögerungsphase der Förderrollen 5 wird von den elektrischen Maschinen 20 aus der Bremsenergie Gleichspannung erzeugt, welche über die Energieversorgungsleitungen 74 an das Energieversorgungssystem abgegeben wird, wie durch die Pfeile angedeutet.

Während im ersten Abschnitt 84 des Rollenförderers 1 eine Verzögerungsphase für die Förderrollen 5 eingeleitet wird, wird im zweiten Abschnitt 85 des Rollenförderers 1 eine Beschleunigungsphase für die Förderrollen 5 eingeleitet, beispielsweise die Förderrollen 5 aus dem Stillstand auf Nenndrehzahl beschleunigt.

In der Beschleunigungsphase der Förderrollen 5 des zweiten Abschnittes 85 wird von den elektrischen Maschinen 20 aus dem Energieversorgungssystem Energie benötigt, welche nun von den Netzteilen 81 und elektrischen Maschinen 20 des ersten Abschnittes 84, wie durch die Pfeile angedeutet, oder von den elektrischen Maschinen 20 des ersten Abschnittes 84 entstammen kann.

Es versteht sich, dass von irgendeinem der Abschnitte von einer oder mehreren Förderrollen 5 des Rollenförderers 1 generatorisch Energie erzeugt und für irgendeinen der Abschnitte des Rollenförderers 1 für eine oder mehrere Förderrollen 5 bereitgestellt wird.

Die Versorgungsspannung wird von einem, an das Energieversorgungssystem, insbesondere am zweiten Energieversorgungsbus 73 angeschlossenem Überwachungsmodul 86 erfasst, beispielsweise durch zyklische Messungen der Versorgungsspannung.

Wie in Fig. 9 eingetragen, kann am Energieversorgungssystem, insbesondere am zweiten Energieversorgungsbus 73 auch zumindest ein elektrischer Verbraucher 87 angeschlossen werden. Dieser elektrische Verbraucher 85 wird zugeschaltet, wenn die Spannung im Energieversorgungssystem einen maximalen Grenzwert der Versorgungsspannung, insbesondere im zweiten Energieversorgungsbus 73, übersteigt. Dieser Fall kann auftreten, wenn beispielsweise im "Nothalt" des Rollenförderers 1 eine übermäßig hohe Anzahl an oder sämtliche Förderrollen 5 in eine Verzögerungsphase versetzt bzw. abgebremst werden und die elektrischen Motoren 20 Energie erzeugen, welche in das Energieversorgungssystem, insbesondere den zweiten Energieversorgungsbus 73, eingespeist wird, sodass ein hoher Spannungsanstieg die Folge ist. Der elektrische Verbraucher 87, kann die entstehende Bremsenergie absorbieren bzw. die nicht benötigte überschüssige, elektrische Energie, welche in den zweiten Energieversorgungsbus 73 eingespeist wurde, bedarfsweise in Wärmeenergie umwandeln. Dadurch werden Spannungsüberhöhungen vermieden bzw. das Spannungsniveau in einer Bandbreite von beispielsweise 48 VDC ± 20% konstant gehalten. Beispielsweise ist der elektrische Verbraucher 87 durch einen Bremswiderstand gebildet, der außerhalb der Förderrolle 5 angeordnet ist.

Andererseits ist es aber auch möglich, dass am Energieversorgungssystem, insbesondere am zweiten Energieversorgungsbus 73 zumindest ein Energiespeicher 88, wie in strichlierten Linien eingetragen, angeschlossen wird, der beispielsweise durch einen Elektrolytkondensator gebildet ist. Der Energiespeicher 88 wird aufgeladen, wenn die in der Verzögerungsphase erzeugte überschüssige Spannung in das Energieversorgungssystem, insbesondere im zweiten Energieversorgungsbus 73, eingespeist wird.

Wird von einer oder mehreren elektrischen Maschinen 20, die in die Beschleunigungsphase schalten, nur ein Teil der von einer oder mehreren elektrischen Maschinen 20, die in die Verzögerungsphase schalten, erzeugten überschüssigen Energie benötigt bzw. übersteigt im Energieversorgungssystem, insbesondere im zweiten Energieversorgungsbus 73, die Versorgungsspannung einen maximalen Grenzwert, kann ein Teil der überschüssigen Energie für die Beschleunigungsphase und ein Teil der überschüssigen Energie für das Aufladen des Energiespeichers 88 verwendet werden.

Die zwischengespeicherte, elektrische Energie kann aus dem Energiespeicher 88 in das Energieversorgungssystem eingespeist werden, wenn sie in einer Beschleunigungsphase einer oder mehrerer motorisierter Förderrollen 5 benötigt wird. Das Einspeisen der zwischengespeicherten Energie erfolgt gesteuert durch eine, in strichlierten Linien eingetragenes elektronische Schaltung 89, wobei vom Überwachungsmodul 87 die Versorgungsspannung erfasst wird, um sicherzustellen, dass der maximale Grenzwert der Versorgungsspannung im Energieversorgungssystem, insbesondere im zweiten Energieversorgungsbus 73, daher ca. 58 VDC nicht überschritten wird.

Nach einer anderen Ausführung können am Energieversorgungssystem, insbesondere am zweiten Energieversorgungsbus 73 sowohl zumindest ein elektrischer Verbraucher 87 und zumindest ein Energiespeicher 88 angeschlossen werden. Dadurch wird die Funktionalität des Energieversorgungssystems erweitert.

Erreicht der Energiespeicher 88 seine maximale Speicherkapazität und kann die überschüssige, elektrische Energie von ihm nicht mehr aufgenommen werden, wird bei einer Überschreitung des maximalen Grenzwertes der Versorgungsspannung die überschüssige, elektrische Energie am elektrischen Verbraucher 88 in Wärmeenergie umgewandelt, sofern die Energie nicht von einem oder mehreren elektrischen Motoren 20 benötigt wird.

Erreicht hingegen der Energiespeicher 88 seine maximale Speicherkapazität und kann die überschüssige, elektrische Energie von ihm nicht mehr aufgenommen werden, kann die überschüssige, elektrische Energie in einer Beschleunigungsphase von einem oder mehreren elektrischen Motoren 20 genutzt werden, sodass auf bei vollständig aufgeladenem Energiespeicher 88 keine Überschreitung des maximalen Grenzwertes der Versorgungsspannung erfolgt.

Auch wenn in obiger Ausführung nur ein elektrischer Verbraucher 87 und Energiespeicher 88 beschrieben ist, können je nach deren Leistungsaufnahme auch mehrere Verbraucher 87 und Energiespeicher 88 vorgesehen werden. Durch die Redundanz von elektrischen Verbrauchern 87 und Energiespeichern 88 wird ein, gegen Störungen sehr robustes Energieversorgungssystem geschaffen. Insbesondere ist es von Vorteil, wenn mehrere Energiespeicher 88 verwendet werden, wobei einer der Energiespeicher 88 die zwischengespeicherte Energie an das Energieversorgungssystem abgibt und die abgegebene Energie in einer Beschleunigungsphase einer oder mehrerer Förderrollen 5 herangezogen wird, und der andere der Energiespeicher 88 durch die generatorisch erzeugte Energie, die in einer Beschleunigungsphase einer oder mehrerer Förderrollen 5 nicht benötigt wird, aufgeladen wird. Wird eine übermäßig hohe Anzahl an Förderrollen 5 in eine Beschleunigungsphase geschalten, kann Energie gleichzeitig aus mehreren Energiespeichern 88 verwendet werden.

Im Betrieb des Rollenförderers 1 ist auch ein Betriebsmodus möglich, wo beispielsweise eine Vielzahl von Fördergütern 83 gleichzeitig im Block transportiert werden sollen. In diesem Betriebsmodus wird eine entsprechend hohe Anzahl an Förderrollen 5 in eine Beschleunigungsphase geschalten. Um in diesem Betriebsmodus einen unzulässigen Spannungsabfall auf einen minimalen Grenzwert der Versorgungsspannung im Energieversorgungssystem zu vermeiden, kann es nun vorgesehen sein, dass von zumindest einem von mehreren Energiespeichern 88' (wie in Fig. 9 in strichpunktierten Linien eingetragen) Energie bereitstellt wird. Die elektronische Schaltung 89' (wie in Fig. 9 in strichpunktierten Linien eingetragen) sorgt dafür, dass insbesondere in "lastarmen" Zeiten dieser Energiespeicher 88' von einem Netzteil 81 und/oder einer elektrischen Maschine 20 in oben beschriebener Weise vollständig aufgeladen wird.

Wird vom Überwachungsmodul 86 nun festgestellt, dass die Versorgungsspannung im Energieversorgungssystem auf einen minimalen Grenzwert absinkt, wird aus dem vollständig aufgeladenen Energiespeicher 88' die Energie in das Energieversorgungssystem eingespeist und damit die elektrischen Maschinen 20 zumindest anteilig mit Energie versorgt.

**Bezugszeichenaufstellung**

| | | | |
|---|---|---|---|
| 1 | Rollenförderer | 41 | Leitungssystem |
| 2 | Rahmen | 42 | Kontaktelement |
| 3 | Förderrichtung | 43 | Leitung |
| 4 | Rahmenprofil | 44 | Isolierkörper |
| 5 | Förderrolle | 45 | Aussparung |
| | | | |
| 6 | Förderrolle | 46 | Aussparung |
| 7 | Querträger | 47 | Grundkörper |
| 8 | Zugmittel | 48 | Rastnase |
| 9 | | 49 | Federzunge |
| 10 | | 50 | Lagerkörper |
| | | | |
| 11 | Lageraufnahme | 51 | Führungsteil |
| 12 | | 52 | Lagerbuchse |
| 13 | Einschuböffnung | 53 | Lagerbund |
| 14 | Führungsrand | 54 | Verriegelungsvorrichtung |
| 15 | Profilschenkel | 55 | Außenfläche |
| | | | |
| 16 | Rollenachse | 56 | Innenfläche |
| 17 | Rollenkörper | 57 | Formelement |
| 18 | Lager | 58 | Lagerbohrung |
| 19 | Lager | 59 | Sicherungselement |
| 20 | elektrische Maschine | 60 | Rastnase |
| | | | |
| 21 | Antriebselektronik | 61 | Federzunge |
| 22 | Lagervorrichtung | 62 | Übertriebsscheibe |
| 23 | Lagervorrichtung | 63 | Rille |
| 24 | Stator | 64 | |
| 25 | Rotor | 65 | |
| | | | |
| 26 | Permanentmagnet | 66 | Datenbus |
| 27 | Anschlussstecker | 67 | Energieversorgungsbus |
| 28 | Lagerkörper | 68 | Tragkörper |
| 29 | Führungsteil | 69 | Trägerschiene |
| 30 | Lagerbuchse | 70 | |
| | | | |
| 31 | Lagerbund | 71 | Kommunikation- und Energiever-sorgungseinheit |
| 32 | Halterung | | |
| 33 | Verriegelungsvorrichtung | 72 | Datenbus |
| 34 | Außenfläche | 73 | Energieversorgungsbus |
| 35 | Innenfläche | 74 | Energieversorgungsleitung |
| | | 75 | Buskoppler |
| 36 | Formelement | | |
| 37 | Lagerbohrung | 76 | Schnittstelle |
| 38 | Aufnahme | 77 | Schnittstelle |
| 39 | Kontaktierungsvorrichtung | 78 | Schnittstelle |
| 40 | Bussystem | 79 | Schnittstelle |
| | | 80 | Stichleitung |
| 81 | Netzteile | | |
| 82 | Energieversorgungsnetz | | |
| 83 | Ladegut | | |
| 84 | Abschnitt | | |
| 85 | Abschnitt | | |
| | | | |
| 86 | Überwachungsmodul | | |
| 87 | elektrischer Verbraucher | | |
| 88 | Energiespeicher | | |
| 89 | Schaltung | | |
| 88' | Energiespeicher | | |
| | | | |
| 89' | Schaltung | | |

## Patentansprüche

1. Verfahren zum Betreiben eines Rollenförderers (1) mit mehreren Abschnitten (84, 85) und mit einem elektrischen Energieversorgungssystem (67, 73) und einer Vielzahl von Förderrollen (5,6) je Abschnitt (84, 85), wovon mehrere der Förderrollen (5) in jeweils einem Abschnitt (84, 85) jeweils einen Rollenkörper (17) und eine innerhalb von diesem angeordnete, elektrische Maschine (20), insbesondere einen Antriebsmotor, umfassen, wobei die elektrischen Maschinen (20) der Förderrollen (5) über das Energieversorgungssystem (67, 73) mit elektrischer Energie versorgt werden und in einer Verzögerungsphase beim Abbremsen eines Fördergutes (83) in ihnen generatorisch elektrische Energie erzeugen, und wobei die von den elektrischen Maschinen (20) erzeugte elektrische Energie von den Förderrollen (5) eines Abschnitts (84, 85) in das Energieversorgungssystem (67, 73) eingespeist wird und von zumindest einer elektrischen Maschine (20) einer Förderrolle (5) eines anderen Abschnitts (84, 85) in einer Beschleunigungsphase verwendet wird.

2. Verfahren nach Anspruch 1, **dadurch gekennzeichnet, dass** ein jeder Abschnitt (84, 85) mehrere Förderrollen (5) mit elektrischen Maschinen (20) umfasst und diese über Energieversorgungsleitungen (74) an einen ersten Energieversorgungsbus (67) des Energie-versorgungssystems angeschlossen sind, und ein zweiter Energieversorgungsbus (73) des Energieversorgungssystems über je eine Kommunikation- und Energieversorgungseinheit (71) an den ersten Energieversorgungsbus (67) der Abschnitte (84, 85) angeschlossen ist, sodass die Förderrollen (5) eines ersten Abschnitts (84, 85) die von ihren elektrischen Maschinen (20) erzeugte elektrische Energie über die Energieversorgungsleitungen (74), den ersten Energieversorgungsbus (67) und die erste Kommunikation- und Energieversorgungseinheit (71) des ersten Abschnitts (84, 85) an den zweiten Energieversorgungsbus (73) abgeben und die elektrischen Maschinen (20) der Förderrollen (5) in einem zweiten Abschnitt (84, 85) vom zweiten Energieversorgungsbus (73) über die zweite Kommunikation- und Energieversorgungseinheit (71), den ersten Energieversorgungsbus (67) und die Energieversorgungsleitungen (74) des zweiten Abschnitts (84, 85) diese elektrische Energie aufnehmen.

3. Verfahren nach Anspruch 2, **dadurch gekennzeichnet, dass** zur Stabilisierung der Energieversorgung im zweiten Energieversorgungsbus (73) jede Kommunikation- und Energieversorgungseinheit (71) von jeweils einem Netzteil (81) mit Energie versorgt wird, wobei
das Netzteil (81) mit einem AC/DC-Wandler eine Wechselspannung aus einem Energieversorgungsnetz (82) in eine Gleichspannung von kleiner 50 VDC umwandelt.

4. Verfahren nach Anspruch 1, **dadurch gekennzeichnet, dass** die in das Energieversorgungssystem (67, 73) eingespeiste, elektrische Energie einen an das Energieversorgungssystem (67, 73) angeschlossenen Energiespeicher (88) auflädt.

5. Verfahren nach Anspruch 4, **dadurch gekennzeichnet, dass** die zwischengespeicherte elektrische Energie aus dem Energiespeicher (88) in das Energieversorgungssystem (67, 73) eingespeist wird, wenn sie in einer Beschleunigungsphase für zumindest eine motorisierte Förderrolle (5) benötigt wird.

6. Verfahren nach Anspruch 1, **dadurch gekennzeichnet, dass** die in das Energieversorgungssystem (67, 73) eingespeiste, elektrische Energie einen Energiespeicher (88) auflädt als auch von zumindest einer elektrischen Maschine (20) einer anderen Förderrolle (5) in einer Beschleunigungsphase verwendet wird.

7. Verfahren nach Anspruch 1, **dadurch gekennzeichnet, dass** ein an das Energieversorgungssystem (67, 73) angeschlossener, elektrischer Verbraucher (87), insbesondere ein Bremswiderstand, zugeschaltet wird, wenn die Spannung im Energieversorgungssystem (67, 73) einen Grenzwert erreicht.

8. Verfahren nach einem der Ansprüche 1 bis 7, **dadurch gekennzeichnet, dass** die Versorgungsspannung im Energieversorgungssystem (67, 73) von einem Überwachungsmodul (86) erfasst wird.

9. Rollenrorderer (1) zum Fördern von Fördergut mit mehreren Abschnitten (84, 85) und mit einem elektrischen Energieversorgungssystem (67, 73) und einer Vielzahl von Förderrollen (5, 6) je Abschnitt (84, 85), wovon mehrere der Förderrollen (5) in jeweils einem Abschnitt (84, 85) jeweils einen Rollenkörper (17) und eine innerhalb von diesem angeordnete, elektrische Maschine (20), insbesondere einen Antriebsmotor, umfassen, wobei die elektrischen Maschinen (20) der Förderrollen (5) an das Energieversorgungssystem (67, 73) zur Versorgung mit elektrischer Energie angeschlossen sind und beim Abbremsen eines Fördergutes (83) als Generator dienen, und wobei die elektrischen Maschinen (20) über Energieversorgungsleitungen (74) an das Energieversorgungssystem (67, 73) angeschlossen sind, und wobei die motorisierten Förderrollen (5) eines Abschnitts (84, 85) über die Energieversorgungsleitungen (74) die von ihren elektrischen Maschinen (20) generatorisch erzeugte, elektrische Energie an das Energieversorgungssystem (67, 73) abgeben und zumindest eine elektrische Maschine (20) einer Förderrolle (5) eines anderen Abschnitts (84, 85) beim Beschleunigen des Förderguts (83) diese elektrische Energie über die Energieversorgungsleitung (74) aufnimmt.

10. Rollenförderer (1) nach Anspruch 9, **dadurch gekennzeichnet, dass** ein jeder Abschnitt (84, 85) mehrere Förderrollen (5) mit elektrischen Maschinen (20) umfasst und über Energieversorgungsleitungen (74) an einen ersten Energieversorgungsbus (67) des Energieversorgungssystems angeschlossen sind, und ein zweiter Energieversorgungsbus (73) des Energieversorgungssystems über je eine Kommunikation- und Energieversorgungseinheit (71) an den ersten Energieversorgungsbus (67) der Abschnitte (84, 85) angeschlossen ist, sodass die Förderrollen (5) eines ersten Abschnitts (84, 85) die von ihren elektrischen Maschinen (20) erzeugte elektrische Energie über die Energieversorgungsleitungen (74), den ersten Energieversorgungsbus (67) und die erste Kommunikation und Energieversorgungseinheit (71) des ersten Abschnitts (84, 85) an den zweiten Energieversorgungsbus (73) abgeben und die elektrischen Maschinen (20) der Förderrollen (5) in einem zweiten Abschnitt (84, 85) vom zweiten Energieversorgungsbus (73) über die zweite Kommunikation- und Energieversorgungseinheit (71), den ersten Energieversorgungsbus (67) und die Energieversorgungsleitungen (74) des zweiten Abschnitts (84, 85) diese elektrische Energie aufnehmen.

11. Rollenförderer nach Anspruch 10, **dadurch gekennzeichnet, dass** zur Stabilisierung der Energieversorgung im zweiten Energieversorgungsbus (73) jede Kommunikationund Energieversorgungseinheit (71) an jeweils ein Netzteil (81) angeschlossen ist, wobei das Netzteil (81) einen AC/DC-Wandler zur Umwandlung einer Wechselspannung aus einem Energieversorgungsnetz (82) in eine Gleichspannung von kleiner 50 VDC umfasst.

12. Rollenförderer nach Anspruch 9, **dadurch gekennzeichnet, dass** außerhalb der Förderrolle (5) mindestens ein elektrischen Verbraucher (87) vorgesehen ist, der an das Energieversorgurigssystem (67, 73) angeschlossen ist.

13. Rollenförderer nach Anspruch 9, **dadurch gekennzeichnet, dass** außerhalb der Förderrolle (5) mindestens ein Energiespeicher (88) vorgesehen ist, der an das Energieversorgungssystem (67, 73) angeschlossen ist.

14. Rollenförderer nach Anspruch 9, **dadurch gekennzeichnet, dass** außerhalb der Förderrolle (5) mindestens ein Energiespeicher (88) und mindestens ein elektrischen Verbraucher (87) vorgesehen sind, die an das Energieversorgungssystem (67, 73) angeschlossen sind.

15. Rollenförderer nach einem der Ansprüche 9 bis 14, **dadurch gekennzeichnet, dass** außerhalb der Förderrolle (5) mindestens ein Überwachungsmodul (86) zum Erfassen der Versorgungsspannung im Energieversorgungssystem (67, 73) vorgesehen ist, welches an das Energieversorgungssystem (67, 73) angeschlossen ist.

16. Rollenförderer nach Anspruch 9, **dadurch gekennzeichnet, dass** die Förderrolle (5) eine erste Lagervorrichtung (22) aufweist und über die Lagervorrichtung (22) mit einem der Enden in einer Lageraufnahme (11) an einem Rahmenprofil (4) des Rollenförderers (1) montierbar ist, wobei die Lagervorrichtung (22) einen Lagerkörper (28) mit einer gegen das Rahmenprofil (4) anlegbaren, wärmeleitenden Außenfläche (34) umfasst.

## Claims

1. Method for operating a roller conveyor (1) having several sections (84, 85) and having an electrical power supply system (67, 73) and a plurality of conveyor rollers (5, 6) per section (84, 85), whereof several of the conveyor rollers (5) in one respective section (84, 85) comprise one roller body (17) each and an electrical machine (20), in particular a drive motor, arranged therein, with the electrical machines (20) of the conveyor rollers (5) being supplied with electrical power by the electrical power supply system (67, 73) and producing electrical power inside them in the manner of a generator during a deceleration phase when a conveyed item is braked and with the electrical power generated by the electrical machines being fed by the conveyor roller (5) of a section (84, 85) into the power supply system (67, 73) and used by at least one electrical machine (20) of a conveyor roller (5) of another section (84, 85) in an acceleration phase.

2. Method according to claim 1, **characterized in that** each section (84, 85) comprises a number of conveyor rollers (5) having electrical machines (20) and the latter are connected to a first electrical power supply bus (67) of the electrical power supply system via power supply lines (74), and a second electrical power supply bus (73) of the electrical power supply system is connected to the first electrical power supply bus (67) of the sections (84, 85) via one communication and electrical power supply unit (71) each, so that the conveyor rollers (5) of a first section (84, 85) deliver electrical power generated by their electrical machines (20) via the power supply lines (74), the first electrical power supply bus (67) and the first communication and electrical energy supply unit (71) of the first section (84, 85) to the second electrical power supply bus (73) and the electrical machines (20) of the conveyor rollers (5) in a second section (84, 85) of the second electrical power supply bus (73) absorb this electrical power via the second communication and electrical power supply unit (71), the first electrical power supply bus (67) and the power supply lines (74) of the second section (84, 85).

3. Method according to claim 2, **characterized in that** for stabilizing the electrical power supply in the second electrical power supply bus (73) each communication and electrical power supply unit (71) is provided with electrical power by one power supply unit, with the power supply unit (81) converting an alternating voltage from an energy supply network (82) into a direct voltage of lower than 50 VDC by means of a AC/DC converter.

4. Method according to claim 1, **characterized in that** the electrical power fed into the electrical power supply system (67, 73) charges an energy storage (88) connected to the electrical power supply system (67, 73).

5. Method according to claim 4, **characterized in that** the intermediately stored electrical power from the energy storage (88) is fed into the electrical power supply system (67, 73) when it is required for the at least one motorized conveyor roller (5) in an acceleration phase.

6. Method according to claim 1, **characterized in that** the electrical power fed into the electrical power supply system (67, 73) charges an energy storage (88) and is also used by at least one electrical machine in another conveyor roller (5) in an acceleration phase.

7. Method according to claim 1, **characterized in that** an electrical load (87), in particular a braking resistor, connected to the electrical power supply system (67, 73) is switched on additionally, when the voltage in the electrical power supply system (67, 73) reaches a threshold value.

8. Method according to one of claims 1 to 7, **characterized in that** the supply voltage in the electrical power supply system (67, 73) is detected by a monitoring module (86).

9. Roller conveyor (1) for conveying conveyed items having several sections (84, 85) and an electrical power supply system (67, 73) and a plurality of conveyor rollers (5, 6) per section (84, 85), whereof several of the conveyor rollers (5) in one respective section (84, 85) comprise one roller body (17) each and an electrical machine (20), in particular a drive motor, arranged therein, with the electrical machines (20) of the conveyor rollers (5) being connected to the electrical power supply system (67, 73) for supply with electrical power and acting as a generator when a conveyed item (83) is decelerated and with the electrical machines (20) being connected to the electrical power supply system (67, 73) via power supply lines (74), and with the motorized conveyor rollers (5) of a section (84, 85) releasing electrical power produced by their electrical machines (20) in the manner of a generator to the electrical power supply system (67, 73) and at least one electrical machine (20) of a conveyor roller 85) absorbs this electrical power via the power supply line (74) when the conveyed item is accelerated.

10. Roller conveyor (1) according to claim 9, **characterized in that** each section (84, 85) comprises a number of conveyor rollers (5) having electrical machines (20) which are connected to a first electrical power supply bus (67) of the electrical power supply system via power supply lines (74), and a second electrical power supply bus (73) of the electrical power supply system is connected to the first electrical power supply bus (67) of the sections (84, 85) via one communication and electrical power supply unit (71) each, so that the conveyor rollers (5) of a first section (84, 85) deliver electrical power generated by their electrical machines (20) via the power supply lines (74), the first electrical power supply bus (67) and the first communication and electrical energy supply unit (71) of the first section (84, 85) to the second electrical power supply bus (73) and the electrical machines (20) of the conveyor rollers (5) in a second section (84, 85) of the second electrical power supply bus (73) absorb this electrical power via the second communication and electrical power supply unit (71), the first electrical power supply bus (67) and the power supply lines (74) of the second section (84, 85).

11. Roller conveyor according to claim 10, **characterized in that** for stabilizing the electrical power supply in the second electrical power supply bus (73) each communication and electrical power supply unit (71) is provided with electrical power by one power supply unit, with the power supply unit (81) converting an alternating voltage from an energy supply network (82) into a direct voltage of lower than 50 VDC by means of a AC/DC converter.

12. Roller conveyor according to claim 9, **characterized in that** outside the conveyor roller (5), at least one electrical load (87) is provided which is connected to the electrical power supply system (67, 73).

13. Roller conveyor according to claim 9, **characterized in that** outside the conveyor roller (5), at least one energy storage (88) is provided which is connected to the electrical power system (67, 73).

14. Roller conveyor according to claim 9, **characterized in that** outside the conveyor roller (5), at least one energy storage (88) and at least one electrical load (87) are provided which are connected to the electrical power supply system (67, 73).

15. Roller conveyor according to one of claims 9 to 14, **characterized in that** outside the conveyor roller (5) at least one monitoring module (86) for detecting the supply voltage in the electrical power supply system (67, 73) is provided which is connected to the electrical power supply system (67, 73).

16. Roller conveyor according to claim 9, **characterized in that** the conveyor roller 85) has a first bearing device (22) and may be mounted to one of the ends to a frame profile (4) of the roller conveyor (1) in a bearing holder (11) via the bearing device (22), with the bearing device (22) comprising a bearing body (28) having a heat conducting exterior surface (34) that can be rested against the frame profile (4).

## Revendications

1. Procédé de fonctionnement d'un convoyeur à rouleaux (1) comportant plusieurs parties (84, 85) et comportant un système de fourniture d'énergie (67, 73) électrique et une pluralité de rouleaux de convoyage (5, 6) dans chaque partie (84, 85), parmi lesquels plusieurs rouleaux de convoyage (5) dans respectivement une partie (84, 85) comportent chacun un corps de roulement (17) et un moteur électrique (20), en particulier un moteur d'entraînement, disposé à l'intérieur de celui-ci, selon lequel procédé lesdits moteurs électriques (20) des rouleaux de convoyage (5) sont alimentés en énergie électrique par le système de fourniture d'énergie (67, 73) et produisent de l'énergie électrique par eux-mêmes en faisant fonction de générateur, dans une phase de décélération lors du freinage d'un produit transporté (83), et selon lequel l'énergie électrique générée par les moteurs électriques (20) est introduite par les rouleaux de convoyage (5) d'une partie (84, 85) dans le système de fourniture d'énergie (67, 73) et est utilisée par au moins un moteur électrique (20) d'un rouleau de convoyage (5) d'une autre partie (84, 85) dans une phase d'accélération.

2. Procédé selon la revendication 1, **caractérisé en ce que** chacune des parties (84, 85) comporte plusieurs rouleaux de convoyage (5) avec des moteurs électriques (20), et ceux-ci sont raccordés, via des lignes de fourniture d'énergie (74), à un premier bus de fourniture d'énergie (67) du système de fourniture d'énergie, et un deuxième bus de fourniture d'énergie (73) du système de fourniture d'énergie est raccordé au premier bus de fourniture d'énergie (67) des parties (84, 85) respectivement par l'intermédiaire d'une unité de communication et de fourniture d'énergie (71), de telle sorte que les rouleaux de convoyage (5) d'une première partie (84, 85) transmettent l'énergie électrique générée par leurs moteurs électriques (20) au deuxième bus de fourniture d'énergie (73) par l'intermédiaire des lignes de fourniture d'énergie (74), du premier bus de fourniture d'énergie (67) et de la première unité de communication et de fourniture d'énergie (71) de la première partie (84, 85), et les moteurs électriques (20) des rouleaux de convoyage (5) dans une deuxième partie (84, 85) reçoivent cette énergie électrique par le deuxième bus de fourniture d'énergie (73) par l'intermédiaire de la deuxième unité de communication et de fourniture d'énergie (71), du premier bus de fourniture d'énergie (67) et des lignes de fourniture d'énergie (74) de la deuxième partie (84, 85).

3. Procédé selon la revendication 2, **caractérisé en ce que**, pour stabiliser la fourniture d'énergie dans le deuxième bus de fourniture d'énergie (73), chaque unité de communication et de fourniture d'énergie (71) reçoit l'énergie électrique respectivement d'un bloc d'alimentation (81), ledit bloc d'alimentation (81) transformant une tension alternative issue d'un réseau de fourniture d'énergie (82) en une tension continue inférieure à 50 VDC, au moyen d'un convertisseur courant alternatif/courant continu.

4. Procédé selon la revendication 1, **caractérisé en ce que** l'énergie électrique introduite dans le système de fourniture d'énergie (67, 73) charge un accumulateur d'énergie (88) raccordé au système de fourniture d'énergie (67, 73).

5. Procédé selon la revendication 4, **caractérisé en ce que** l'énergie électrique stockée temporairement issue de l'accumulateur d'énergie (88) est introduite dans le système de fourniture d'énergie (67, 73) lorsqu'elle est requise dans une phase d'accélération pour au moins un rouleau de convoyage (5) motorisé.

6. Procédé selon la revendication 1, **caractérisé en ce que** l'énergie électrique introduite dans le système de fourniture d'énergie (67, 73) charge un accumulateur d'énergie (88), de même qu'elle est utilisée par au moins un moteur électrique (20) d'un autre rouleau de convoyage (5) dans une phase d'accélération.

7. Procédé selon la revendication 1, **caractérisé en ce qu'**un consommateur électrique (87), en particulier une résistance de freinage, raccordé au système de fourniture d'énergie (67, 73), est raccordé lorsque la tension dans le système de fourniture d'énergie (67, 73) atteint une valeur limite.

8. Procédé selon l'une quelconque des revendications 1 à 7, **caractérisé en ce que** la tension d'alimentation dans le système de fourniture d'énergie (67, 73) est détectée par un module de surveillance (86).

9. Convoyeur à rouleaux (1) destiné à convoyer des produits, comportant plusieurs parties (84, 85) et comportant un système de fourniture d'énergie (67, 73) électrique et une pluralité de rouleaux de convoyage (5, 6) dans chaque partie (84, 85), parmi lesquels plusieurs rouleaux de convoyage (5) dans respectivement une partie (84, 85) comportent chacun un corps de roulement (17) et un moteur électrique (20), en particulier un moteur d'entraînement, disposé à l'intérieur de celui-ci, les moteurs électriques (20) des rouleaux de convoyage (5) étant raccordés au système de fourniture d'énergie (67, 73) pour être alimentés en énergie électrique et remplissant la fonction d'un générateur au moment du freinage d'un produit transporté (83), et lesdits moteurs électriques (20) étant raccordés au système de fourniture d'énergie (67, 73) via des lignes de fourniture d'énergie (74), et les rouleaux de convoyage (5) motorisés d'une partie (84, 85) transmettant au système de fourniture d'énergie (67, 73) l'énergie électrique générée par leurs moteurs électriques (20) faisant fonction de générateurs, via les lignes de fourniture d'énergie (74), et au moins un moteur électrique (20) d'un rouleau de convoyage (5) d'une autre partie (84, 85) recevant cette énergie électrique via la ligne de fourniture d'énergie (74) au moment de l'accélération du produit transporté (83).

10. Convoyeur à rouleaux (1) selon la revendication 9, **caractérisé en ce que** chacune des parties (84, 85) comporte plusieurs rouleaux de convoyage (5) avec des moteurs électriques (20) et est raccordée via des lignes de fourniture d'énergie (74) à un premier bus de fourniture d'énergie (67) du système de fourniture d'énergie, et un deuxième bus de fourniture d'énergie (73) du système de fourniture d'énergie (71) est raccordé au premier bus de fourniture d'énergie (67) des parties (84, 85) respectivement par l'intermédiaire d'une unité de communication et de fourniture d'énergie (71), de telle sorte que les rouleaux de convoyage (5) d'une première partie (84, 85) transmettent l'énergie électrique générée par leurs moteurs électriques (20) au deuxième bus de fourniture d'énergie (73) par l'intermédiaire des lignes de fourniture d'énergie (74), du premier bus de fourniture d'énergie (67) et de la première unité de communication et de fourniture d'énergie (71) de la première partie (84, 85), et les moteurs électriques (20) des rouleaux de convoyage (5) dans une deuxième partie (84, 85) reçoivent cette énergie électrique par le deuxième bus de fourniture d'énergie (73) par l'intermédiaire de la deuxième unité de communication et de fourniture d'énergie (71), du premier bus de fourniture d'énergie (67) et des lignes de fourniture d'énergie (74) de la deuxième partie (84, 85).

11. Convoyeur à rouleaux selon la revendication 10, **caractérisé en ce que**, pour stabiliser la fourniture d'énergie dans le deuxième bus de fourniture d'énergie (73), chaque unité de communication et de fourniture d'énergie (71) est raccordée respectivement à un bloc d'alimentation (81), ledit bloc d'alimentation (81) comportant un convertisseur courant alternatif/courant continu destiné à transformer une tension alternative issue d'un réseau de fourniture d'énergie (82) en une tension continue inférieure à 50 VDC.

12. Convoyeur à rouleaux selon la revendication 9, **caractérisé en ce qu'**en dehors du rouleau de convoyage (5), il est prévu au moins un consommateur électrique (87), qui est raccordé au système de fourniture d'énergie (67, 73).

13. Convoyeur à rouleaux selon la revendication 9, **caractérisé en ce qu'**en dehors du rouleau de convoyage (5), il est prévu au moins un accumulateur d'énergie (88), qui est raccordé au système de fourniture d'énergie (67, 73).

14. Convoyeur à rouleaux selon la revendication 9, **caractérisé en ce qu'**en dehors du rouleau de convoyage (5), il est prévu au moins un accumulateur d'énergie (88) et au moins un consommateur électrique (87), qui sont raccordés au système de fourniture d'énergie (67, 73).

15. Convoyeur à rouleaux selon l'une quelconque des revendications 9 à 14, **caractérisé en ce qu'**en dehors du rouleau de convoyage (5), il est prévu au moins un module de surveillance (86), qui est destiné à détecter la tension d'alimentation dans le système de fourniture d'énergie (67, 73) et qui est raccordé au système de fourniture d'énergie (67, 73).

16. Convoyeur à rouleaux selon la revendication 9, **caractérisé en ce que** le rouleau de convoyage (5) comporte un premier dispositif d'appui (22) et, par l'intermédiaire dudit dispositif d'appui (22), peut être monté par une des extrémités dans un logement d'appui (11) sur un profilé (4) du bâti du convoyeur à rouleaux (1), ledit dispositif d'appui (22) comportant un corps de support (28) avec une face extérieure (34) thermoconductrice, apte à prendre appui sur le profilé (4) du bâti.
